# FASCICULE DE BREVET EUROPEEN

(11) **EP 0 865 945 B1**
(45) Date de publication et mention de la délivrance du brevet: **21.08.2002**
(21) Numéro de dépôt: 98400607.2
(22) Date de dépôt: 16.03.1998
(51) Int. Cl.: B60H 1/00

(54) **Dispositif de distribution d'air pour le chauffage et/ou la climatisation de l'habitacle d'un véhicule**
Luftverteilungsvorrichtung zur Heizung und/oder Klimatisierung eines Fahrzeuginnenraumes
Air distributing device for heating and/or air-conditioning the interior of a vehicle

(30) Priorité: 18.03.1997 FR 9703273
(43) Date de publication de la demande: 23.09.1998
(73) Titulaire: VALEO CLIMATISATION, 78321 La Verrière (FR)
(72) Inventeur: Loup, Didier, 78310 Maurepas (FR)
(74) Mandataire: Bezault, Jean

(56) Documents cités:
- EP-A- 0 423 778
- DE-A- 4 305 253
- FR-A- 2 728 515
- GB-A- 2 077 417
- US-A- 4 947 735

## Description

L'invention concerne un dispositif de distribution d'air pour le chauffage et/ou la climatisation de l'habitacle d'un véhicule.

Elle concerne plus particulièrement un dispositif du type comprenant une chambre de distribution de forme générale cylindrique, munie d'une entrée d'air et d'au moins trois sorties d'air situées en périphérie de la chambre de distribution, ainsi qu'un volet papillon monté pivotant autour d'un axe à l'intérieur de la chambre de distribution pour contrôler la distribution de l'air par les sorties d'air.

On connaît déjà, d'après la publication GB-A-2 077 417, un dispositif de ce type qui sert à la distribution d'air de ventilation dans l'habitacle d'un véhicule. Dans ce dispositif connu, la chambre de distribution est reliée à trois sorties d'air, à savoir une sortie dégivrage propre à alimenter des buses de dégivrage/désembuage du pare-brise, une sortie aération propre à alimenter des buses d'aération prévues sur la planche de bord du véhicule, et une sortie pieds propre à alimenter des buses dirigées vers la partie inférieure de l'habitacle du véhicule.

Ce dispositif a notamment pour inconvénient que le volet doit pivoter d'un intervalle angulaire important (proche de 180°) entre ses deux positions extrêmes, ce qui nuit à la compacité du dispositif.

Par ailleurs, ce dispositif connu ne permet pas d'assurer un réglage précis de la distribution pour certaines positions du volet.

En outre, dans ce dispositif connu, la chambre de distribution constitue aussi une chambre de mixage dans laquelle se mélangent un flux d'air froid et un flux d'air chaud, en proportions réglables, pour fournir un réglage de la température de l'air à distribuer.

Or, dans ce dispositif connu, le volet papillon ne permet pas un mélange intime de ces deux flux d'air, du moins pour certaines positions du volet.

L'invention a notamment pour but de surmonter les inconvénients précités.

Elle propose à cet effet un dispositif de distribution d'air du type défini dans la revendication 1, dont le préambule est basé sur le document EP 423 778.

Ainsi, le volet de l'invention constitue ce que l'on peut appeler un "volet mixte" comprenant un volet papillon combiné à une arche, que l'on peut encore appeler "partie tambour".

Cette partie en forme d'arche permet d'obturer plus ou moins une des trois sorties d'air, tandis que le volet papillon permet de régler la distribution entre les deux autres sorties d'air, ce qui permet de procurer un réglage précis de la distribution.

Par ailleurs, le volet du dispositif de l'invention permet de répartir la distribution entre trois sorties d'air, et cela avec un angle de débattement généralement voisin de 90°, ce qui permet de limiter l'encombrement.

De plus, le passage d'air défini par la partie en forme d'arche contribue à un meilleur mélange du flux d'air froid et du flux d'air chaud, lorsque la chambre de distribution constitue une chambre de mixage.

Dans une forme de réalisation préférée de l'invention, la paroi d'obturation est une paroi cylindrique partiellement circulaire centrée sur l'axe de pivotement du volet. Cette paroi cylindrique s'étend avantageusement sur un intervalle angulaire inférieur à 45°.

Selon une autre caractéristique de l'invention, les flasques de la partie en forme d'arche se rattachent perpendiculairement au volet.

Avantageusement, ces flasques se rattachent aux deux ailes que comporte le volet.

Pour améliorer le fonctionnement, l'invention prévoit que le volet soit muni d'un joint d'étanchéité périphérique.

Toutefois, la présence d'un joint d'étanchéité n'est généralement pas nécessaire sur la partie en forme d'arche.

Dans une application de l'invention, les trois sorties d'air comprennent une sortie dégivrage, une sortie aération et une sortie pieds.

En pareil cas, la paroi d'obturation de la partie en forme d'arche est avantageusement propre à obturer la sortie pieds dans ladite position définie du volet.

Cette position définie correspond de préférence à une position aération dans laquelle la sortie dégivrage est fermée par une première aile du volet et la sortie aération est ouverte par une deuxième aile du volet, la sortie aération étant alimentée par un flux d'air traversant le passage délimité par la partie en forme d'arche.

Selon une autre caractéristique de l'invention, cette position définie, ou position d'aération, constitue une première position extrême du volet.

De façon préférentielle, le volet est susceptible de prendre une deuxième position extrême dans laquelle la première aile du volet ouvre la sortie dégivrage, tandis que la deuxième aile du volet ferme la sortie aération et la sortie pieds, qui sont adjacentes.

Dans une variante de réalisation, la deuxième aile du volet est munie à son extrémité d'un tronçon de paroi cylindrique circulaire, centré sur l'axe de rotation du volet et s'étendant du côté opposé à la partie en forme d'arche, ledit tronçon de paroi étant propre à coopérer, dans une position intermédiaire du volet, avec une paroi interne du boîtier qui s'étend entre la sortie aération et la sortie pieds.

Ce tronçon de paroi cylindrique circulaire, qui forme portée cylindrique, permet principalement d'empêcher un passage d'air vers la sortie aération lorsque le volet passe d'une position pieds à une position dégivrage-pieds.

Avantageusement, le tronçon de paroi cylindrique circulaire est propre à s'engager, dans la position aération, dans un logement en forme de rainure, formé dans une paroi du boîtier qui délimite la sortie aération. Ceci permet d'éviter un passage d'air vers la sortie dégivrage.

Dans l'application particulière précitée, le volet possède avantageusement un débattement angulaire, entre la première et la deuxième position extrême, qui est d'environ un quart de tour.

Dans cette application particulière, le volet peut prendre au moins trois positions intermédiaires :
- une position dégivrage-pieds dans laquelle la sortie dégivrage et la sortie pieds sont partiellement ouvertes, alors que la sortie aération est fermée;
- une position pieds dans laquelle la sortie pieds est ouverte alors que la sortie dégivrage et la sortie aération sont fermées; et
- une position aération-pieds dans laquelle la sortie aération et la sortie pieds sont ouvertes, alors que la sortie dégivrage est fermée.

Dans la description qui suit, faite seulement à titre d'exemple, on se réfère aux dessins annexés, sur lesquels :
- la figure 1 est une vue en coupe transversale d'un boîtier d'un appareil de chauffage et/ou climatisation de véhicule automobile comprenant un dispositif de distribution d'air selon l'invention, le volet du dispositif étant représenté dans une position extrême dite "position dégivrage";
- la figure 2 est une vue en coupe du volet, le plan de coupe étant perpendiculaire à l'axe de pivotement du volet;
- la figure 3 est une vue en perspective du volet des figures 1 et 2;
- les figures 4, 5 et 6 sont des vues partielles, analogues à la figure 1, montrant trois positions intermédiaires du volet;
- la figure 7 est une vue analogue aux figures 4, 5 et 6, le volet étant représenté dans une autre position extrême dite "position aération";
- la figure 8 est une vue analogue à la figure 7 dans une variante de réalisation, le volet étant représenté en "position aération" ;
- la figure 9 est une vue analogue à la figure 8, dans laquelle le volet est représenté dans une position intermédiaire comprise entre une "position pieds" et une position "dégivrage-pieds" ; et
- la figure 10 est une vue en perspective du volet correspondant à la variante de réalisation des figures 8 et 9.

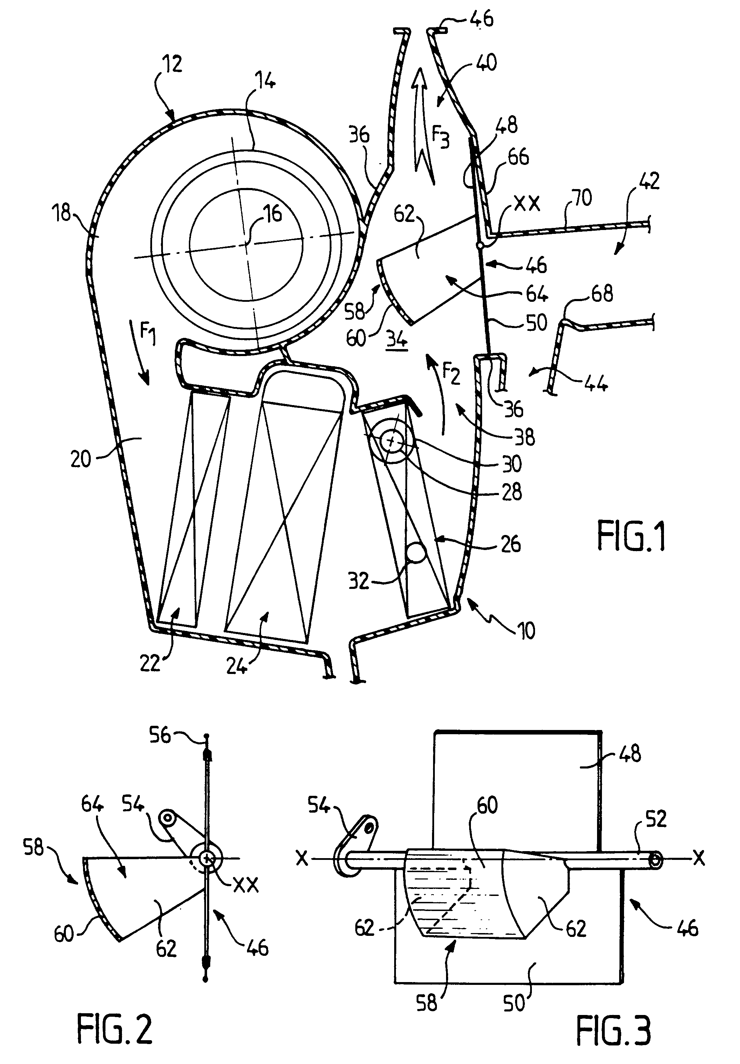

Le dispositif représenté à la figure 1 comprend un boîtier 10 logeant un pulseur d'air 12 muni d'une turbine 14 propre à être entraînée en rotation autour d'un axe 16 par un moteur électrique (non représenté). La turbine 14 est logée dans un boîtier 18 en forme de volute muni d'une sortie tangentielle 20. La turbine 14 est propre à être alimentée axialement par un flux d'air prélevé à l'extérieur et/ou à l'intérieur de l'habitacle du véhicule pour produire un flux d'air pulsé (flèche F1) qui quitte le boîtier 18 en forme de volute par la sortie 20.

Le flux d'air F1 traverse ensuite successivement un filtre 22, un évaporateur 24 relié à un circuit de climatisation classique, et un radiateur de chauffage 26. Le radiateur 26 est propre à être parcouru par un fluide caloporteur qui est généralement le liquide de refroidissement du moteur du véhicule.

Ce fluide pénètre dans le radiateur 26 par une tubulure d'entrée 28 contrôlée par un robinet réglable 30 et quitte le radiateur 26 par une tubulure de sortie 32. On peut ainsi produire, à la sortie du radiateur de chauffage 26, un flux d'air F2 à température réglable. Ce flux d'air débouche dans une chambre de distribution 34 de forme générale cylindrique, au moins en partie circulaire, délimitée par une paroi cylindrique 36 dont les génératrices sont parallèles et à égale distance d'un axe X-X.

La chambre de distribution 34 est munie d'une entrée d'air 38 (qui est reliée à la sortie du radiateur de chauffage 26) et qui permet d'alimenter la chambre 34 par le flux d'air F2 à température réglable. La chambre de distribution 34 est en outre munie de trois sorties d'air situées à sa périphérie, à savoir une sortie dégivrage 40, une sortie aération 42 et une sortie pieds 44.

La sortie dégivrage 40 alimente une buse de sortie d'air 46 qui est formée directement avec le boîtier 10. Cette buse 46 est propre à assurer le dégivrage/désembuage du pare-brise du véhicule. La sortie 42 alimente au moins une buse d'aération (non représentée) située sur la planche de bord du véhicule. Enfin, la sortie pieds 44 alimente au moins une buse (non représentée) située en partie inférieure de l'habitacle pour envoyer de l'air traité dans la région des pieds des occupants du véhicule automobile.

Dans la chambre de distribution 34 est logé un volet 46 de structure particulière, qui est monté pivotant autour de l'axe X-X. Ce volet est un volet de type papillon comprenant une première aile 48 et une deuxième aile 50 (figures 1 à 3) de forme générale rectangulaire, situées dans un même plan, de part et d'autre d'un arbre 52 s'étendant dans la direction de l'axe X-X.

A une extrémité de l'arbre 52 est calé un levier radial 54 (figures 2 et 3) qui peut être actionné par une bielle (non représentée) reliée à un tableau de commande logé dans la planche de bord du véhicule.

La première aile 48 est propre à contrôler la sortie dégivrage 40, tandis que la deuxième aile 50 est propre à contrôler la sortie aération 42 et la sortie pieds 44. Les ailes 48 et 50 sont munies, à leur périphérie, d'un joint d'étanchéité 56 qui est surmoulé (figure 2).

Le volet 46 est muni d'une partie 58 en forme d'arche, que l'on peut encore appeler "partie tambour".

Cette partie 58 comprend une paroi d'obturation 60 (figures 1 à 3) définie par des génératrices parallèles à l'axe de pivotement X-X du volet. Cette paroi est une paroi cylindrique partiellement circulaire centrée sur l'axe de pivotement X-X et s'étendant sur un intervalle angulaire voisin de 45° (figure 2). La paroi d'obturation 60 est reliée aux ailes 48 et 50 du volet 46 par deux flasques 62 qui sont parallèles entre eux et se rattachent perpendiculairement aux ailes 48 et 50.

La partie 58 en forme d'arche délimite ainsi un passage intérieur 64 (figure 2) qui permet de canaliser le flux d'air F2.

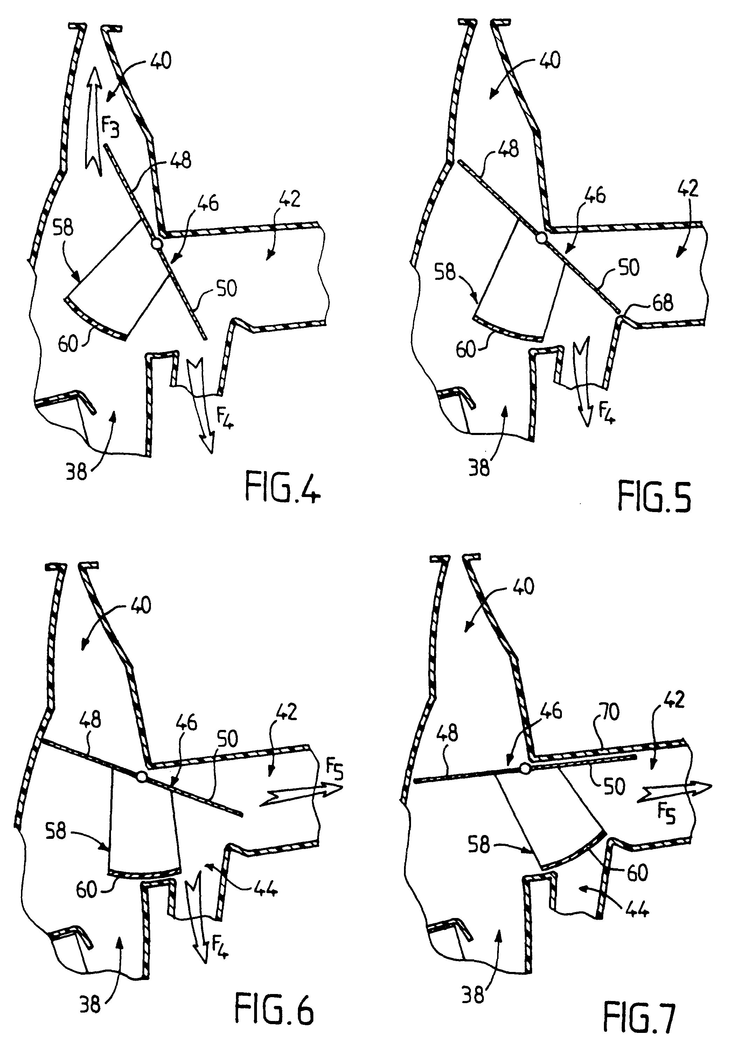

La paroi d'obturation 60 a pour fonction principale de fermer, au moins en partie, la sortie pieds 44 lorsque le volet 46 se trouve dans une position prédéfinie (figure 7), c'est-à-dire lorsque ce volet se trouve dans une position extrême, ou tout au moins au voisinage de cette position extrême.

Le volet 46 peut prendre une première position extrême, dite "position dégivrage", comme représenté à la figure 1, et une deuxième position extrême, dite "position aération", comme représenté à la figure 7, en passant par des positions intermédiaires, comme représenté sur les figures 4, 5 et 6.

Dans la position de la figure 1, l'aile 48 du volet est en appui contre une paroi 66 du boîtier et ouvre complètement la sortie dégivrage 40. Par contre, l'aile 50 ferme à la fois la sortie aération 42 et la sortie pieds 44. Le flux d'air F2 traverse le passage 64 de la partie 58 en forme d'arche pour quitter la chambre de distribution par la sortie dégivrage 40 comme montré par la flèche F3.

Dans la position intermédiaire, dite "position dégivrage-pieds" de la figure 4, le volet a pivoté légèrement par rapport à la position précédente (dans l'exemple dans le sens anti-horaire). L'aile 48 ouvre partiellement la sortie d'air 40, tandis que l'aile 50 entrouvre partiellement la sortie pieds 44. Par contre, la sortie aération 42 est pratiquement fermée. Ainsi, le flux d'air F2 est divisé en un flux F3 traversant la sortie aération 40 et un flux F4 traversant la sortie pieds 44.

Dans la position de la figure 5, le volet 46 a encore pivoté par rapport à la position précédente (toujours dans le sens anti-horaire). Il en résulte que l'aile 48 ferme la sortie dégivrage 40, tandis que l'aile 50 ferme la sortie aération 42. L'extrémité de l'aile 50 vient coopérer à étanchéité avec un bord rentrant 68 formé par le boîtier entre les sorties d'air 42 et 44. Seul un flux F4 traverse la sortie pieds 44.

Dans la position de la figure 6, le volet a encore pivoté par rapport à la position précédente (toujours dans le sens anti-horaire). Dans cette position, l'aile 48 du volet assure toujours la fermeture de la sortie aération 40, l'extrémité de l'aile 48 venant coopérer à étanchéité avec la paroi 36 de la chambre de distribution 34. Dans cette même position, l'aile 50 ouvre la sortie aération 42 et la sortie pieds 44, lesquelles sont alimentées en air comme montré respectivement par les flèches F5 et F4.

Dans la position de la figure 7, qui correspond à une autre position extrême du volet, l'aile 50 est en appui contre une paroi 70 du boîtier qui est sensiblement perpendiculaire à la paroi 66. Dans cette position, l'aile 48 du volet assure toujours la fermeture de la sortie dégivrage 40, tandis que l'aile 50 assure l'ouverture de la sortie aération 42. Par contre, la paroi d'obturation 60 de la partie 58 en forme d'arche assure la fermeture de la sortie pieds 44. Ainsi, le flux d'air F2 alimente uniquement la sortie aération 42, comme montré par la flèche F5. Le flux d'air traverse le passage 64 de la partie 58 en forme d'arche.

Il est à noter toutefois que la paroi d'obturation 60 permet d'obturer plus ou moins la sortie pieds 44 et de procurer ainsi une multiplicité de positions intermédiaires entre celles des figures 6 et 7 pour fournir un réglage précis de la distribution d'air entre la sortie aération 42 et la sortie pieds 44, ce que ne permettrait pas un volet papillon classique.

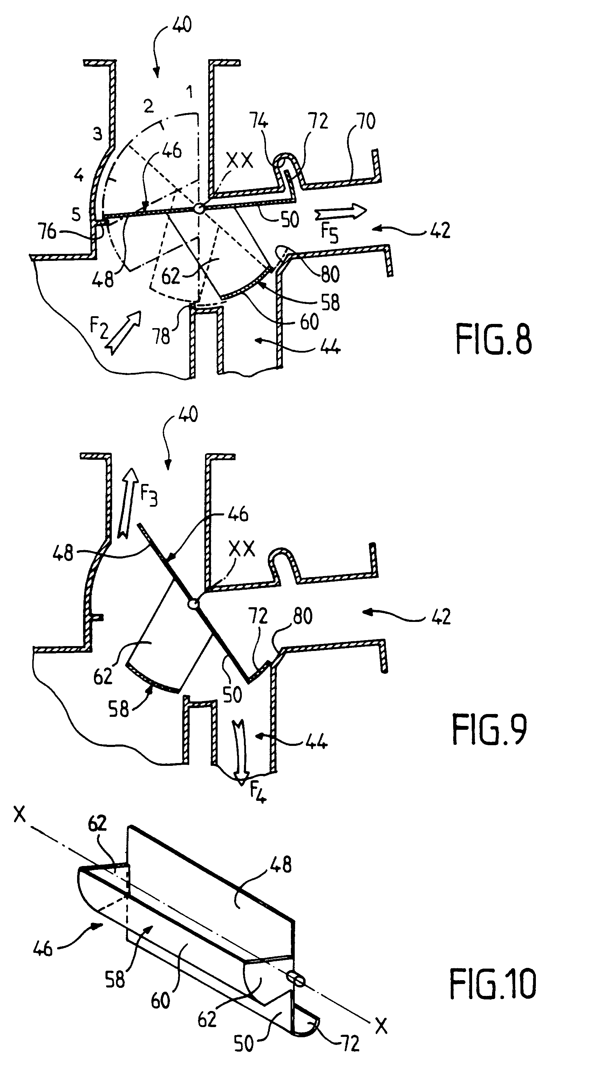

Dans la forme de réalisation des figures 8 à 10, la deuxième aile 50 du volet 46 est munie, à son extrémité, d'un tronçon de paroi cylindrique circulaire 72 centré sur l'axe de rotation X-X du volet et s'étendant du côté opposé à la partie 58 en forme d'arche.

Le volet 46 peut occuper les cinq positions représentées sur la figure 8 : dégivrage (1), dégivrage-pieds (2), pieds (3), aération-pieds (4) et aération (5). La position aération est représentée en trait plein et les autres en trait interrompu.

Le tronçon de paroi 72 est destiné à s'engager dans un logement 74 formé dans la paroi 70 du boîtier, qui délimite la sortie aération 42 (figure 8). Dans l'exemple, ce logement 74 est réalisé sous la forme d'une rainure qui est destinée à accueillir le tronçon de paroi 72 lorsque le volet 46 est dans la position d'aération. Dans cette position (qui correspond à celle de la figure 7), le flux d'air F2 alimente uniquement la sortie aération 42, comme montré par la flèche F5. Etant donné que le bord relevé 72 est reçu dans le logement 74, cela empêche tout passage d'air vers la sortie dégivrage 40. Par ailleurs, dans cette position, l'aile 48 du volet 46 est en appui contre une butée 76 (figure 8) formée dans une paroi délimitant la sortie dégivrage 40, ce qui contribue aussi à empêcher le passage d'un flux d'air vers la sortie dégivrage 40.

Dans l'autre position extrême, ou position dégivrage (position 1), l'aile 48 du volet vient en appui contre une autre butée 78 qui limite le débattement angulaire du volet.

Lorsque le volet passe de la position pieds (position 3) à la position dégivrage-pieds (position 2), ou inversement, la tronçon de paroi 72 vient coopérer avec une paroi intérieure 80 du boîtier (figure 9) qui s'étend entre la sortie aération 42 et la sortie pieds 44 et qui présente une forme cylindrique circulaire centrée sur l'axe XX.

Le tronçon de paroi 72 vient affleurer la paroi 80 en procurant une étanchéité, ce qui empêche tout passage d'air vers la sortie aération 42. Si le tronçon de paroi 72 n'était pas présent, une fuite d'air pourrait se produire par la sortie aération dans certaines positions intermédiaires du volet pour lesquelles il n'est pas souhaité que de l'air passe vers la sortie aération.

Bien entendu, l'invention n'est pas limitée aux formes de réalisation décrites précédemment à titre d'exemple.

Ainsi, la chambre de distribution 34 pourrait, en variante, constituer une chambre de mixage alimentée par un flux d'air froid et un flux d'air chaud.

En pareil cas, la partie en forme d'arche, ou partie tambour, permet d'obtenir un meilleur mélange air froid/air chaud et par conséquent de réduire les écarts de température entre les sorties d'air prévues respectivement en partie haute et en partie basse du boîtier.

De plus, l'invention n'est pas limitée à un volet papillon comportant une seule partie en forme d'arche.

## Revendications

1. Dispositif de distribution d'air pour le chauffage et/ou la climatisation de l'habitacle d'un véhicule, comprenant une chambre de distribution (34) de forme générale cylindrique, munie d'une entrée d'air (38) et d'au moins trois sorties d'air (40, 42, 44) situées en périphérie de la chambre de distribution, ainsi qu'un volet papillon (46) monté pivotant autour d'un axe (X-X) à l'intérieur de la chambre de distribution (34) pour contrôler la distribution de l'air par les sorties d'air, dans lequel le volet (46) est muni d'au moins une partie (58) en forme d'arche comprenant une paroi d'obturation (60) définie par des génératrices parallèles à l'axe de pivotement (X-X) du volet, ladite paroi d'obturation (60) étant reliée au volet par deux flasques espacés (62), en sorte que la paroi d'obturation (60) et les deux flasques (62) délimitent conjointement un passage d'air (64), et que la paroi d'obturation (60) est propre à fermer, au moins en partie, l'une (44) des trois sorties d'air lorsque le volet (46) se trouve dans une position définie,
**caractérisé en ce que** le volet papillon (46) comprend une première aile (48) et une deuxième aile (50) de formes générales rectangulaires situées dans un même plan, de part et d'autre d'un arbre (52) s'étendant dans la direction de l'axe (X-X), la première aile (48) étant propre à contrôler l'une des trois sorties, tandis que la deuxième aile (50) est propre à contrôler les deux autres sorties.

2. Dispositif selon la revendication 1, **caractérisé en ce que** la paroi d'obturation (60) est une paroi cylindrique partiellement circulaire, centrée sur l'axe de pivotement (X-X) du volet (46).

3. Dispositif selon la revendication 2, **caractérisé en ce que** la paroi cylindrique (60) s'étend sur un intervalle angulaire inférieur à 45°.

4. Dispositif selon l'une des revendications 1 à 3, **caractérisé en ce que** les flasques (62) se rattachent perpendiculairement au volet (46).

5. Dispositif selon l'une des revendications 1 à 4, **caractérisé en ce que** les flasques (62) se rattachent aux deux ailes (48, 50) que comporte le volet.

6. Dispositif selon l'une des revendications 1 à 5, **caractérisé en ce que** le volet (46) est muni d'un joint d'étanchéité périphérique (56).

7. Dispositif selon l'une des revendications 1 à 6, dans lequel les trois sorties d'air comprennent une sortie dégivrage (40), une sortie aération (42) et une sortie pieds (44), **caractérisé en ce que** la paroi d'obturation (60) est propre à obturer la sortie pieds (44) dans ladite position prédéfinie du volet.

8. Dispositif selon la revendication 7, **caractérisé en ce que** ladite position prédéfinie du volet est une position aération dans laquelle la sortie dégivrage est fermée par une première aile (48) du volet (46) et la sortie aération (42) est ouverte par une deuxième aile (50) du volet, la sortie aération (42) étant alimentée par un flux d'air traversant le passage (64) délimité par la partie (58) en forme d'arche.

9. Dispositif selon la revendication 8, **caractérisé en ce que** la position prédéfinie, ou position d'aération, constitue une première position extrême du volet.

10. Dispositif selon la revendication 9, **caractérisé en ce que** le volet est susceptible de prendre une seconde position extrême dans laquelle la première aile (48) du volet ouvre la sortie dégivrage (40), tandis que la deuxième aile (50) du volet ferme la sortie aération (42) et la sortie pieds (44), qui sont adjacentes.

11. Dispositif selon l'une des revendications 8 à 10, **caractérisé en ce que** la deuxième aile (50) du volet (46) est munie à son extrémité d'un tronçon de paroi cylindrique circulaire (72), centré sur l'axe de rotation (X-X) du volet et s'étendant du côté opposé à la partie (58) en forme d'arche, ledit tronçon de paroi (72) étant propre à coopérer, dans une position intermédiaire du volet, avec une paroi interne (80) du boîtier qui s'étend entre la sortie aération (42) et la sortie pieds (44).

12. Dispositif selon la revendication 11, **caractérisé en ce que** le tronçon de paroi cylindrique circulaire (72) est propre à s'engager, dans la position aération, dans un logement (74) en forme de rainure formé dans une paroi (70) du boîtier qui délimite la sortie aération (42).

13. Dispositif selon les revendications 9 et 10 prises en combinaison, **caractérisé en ce que** le volet (46) possède un débattement angulaire entre la première et la deuxième position extrême, qui est d'environ un quart de tour.

14. Dispositif selon l'une des revendications 9 à 13, **caractérisé en ce que** le volet (46) est propre à prendre au moins trois positions intermédiaires :
- une position dégivrage-pieds en laquelle la sortie dégivrage (40) et la sortie pieds (44) sont partiellement ouvertes, alors que la sortie aération (42) est fermée;
- une position pieds en laquelle la sortie pieds (44) est ouverte alors que la sortie dégivrage (40) et la sortie aération (42) sont fermées; et
- une position aération-pieds en laquelle la sortie aération (42) et la sortie pieds (44) sont ouvertes, alors que la sortie dégivrage (40) est fermée.

## Patentansprüche

1. Vorrichtung zum Verteilen von Luft zum Heizen und/oder Klimatisieren des Innenraums eines Fahrzeugs, mit einer Verteilungskammer (34) von allgemein zylindrischer Form, die mit einem Lufteinlaß (38) und mindestens drei Luftauslässen (40, 42, 44) versehen ist, die am Umfang der Verteilungskammer angeordnet sind, sowie einer Ventilklappe (46), die um eine Achse (X-X) im Inneren der Verteilungskammer (34) drehbar gelagert ist, um die Verteilung der Luft durch die Luftauslässe zu steuern, wobei die Klappe (46) mit mindestens einem bogenförmigen Teil (58) versehen ist, der eine Absperrwand (60) aufweist, die durch zur Drehachse (X-X) der Klappe parallele Mantellinien definiert ist, wobei die Absperrwand (60) durch zwei beabstandete Flansche (62) mit der Klappe verbunden ist, so daß die Absperrwand (60) und die zwei Flansche (62) gemeinsam einen Luftdurchgang (64) begrenzen, und daß die Absperrwand (60) zumindest teilweise einen (44) der drei Luftauslässe verschließen kann, wenn sich die Klappe (46) in einer definierten Position befindet,
**dadurch gekennzeichnet, daß** die Ventilklappe (46) einen ersten Flügel (48) und einen zweiten Flügel (50) von jeweils allgemein rechteckiger Form aufweist, die in ein und derselben Ebene auf beiden Seiten einer Achse (52) liegen, die sich in der Richtung der Achse (X-X) erstreckt, wobei der erste Flügel (48) einen der drei Auslässe steuern kann, während der zweite Flügel (50) die zwei anderen Auslässe steuern kann.

2. Vorrichtung nach Anspruch 1, **dadurch gekennzeichnet, daß** die Absperrwand (60) eine teilweise kreisförmige, zylindrische Wand ist, die auf der Drehachse (X-X) der Klappe (46) zentriert ist.

3. Vorrichtung nach Anspruch 2, **dadurch gekennzeichnet, daß** sich die zylindrische Wand (60) in einem Winkelintervall von weniger als 45° erstreckt.

4. Vorrichtung nach einem der Ansprüche 1 bis 3, **dadurch gekennzeichnet, daß** sich die Flansche (62) senkrecht an die Klappe (46) anschließen.

5. Vorrichtung nach einem der Ansprüche 1 bis 4, **dadurch gekennzeichnet, daß** sich die Flansche (62) an die zwei Flügel (48, 50) anschließen, die die Klappe umfaßt.

6. Vorrichtung nach einem der Ansprüche 1 bis 5, **dadurch gekennzeichnet, daß** die Klappe (46) mit einer Umfangsdichtung (56) versehen ist.

7. Vorrichtung nach einem der Ansprüche 1 bis 6, bei welcher die drei Luftauslässe einen Enteisungsauslaß (40), einen Belüftungsauslaß (42) und einen Fußauslaß (44) umfassen, **dadurch gekennzeichnet, daß** die Absperrwand (60) den Fußauslaß (44) in der vordefinierten Position der Klappe versperren kann.

8. Vorrichtung nach Anspruch 7, **dadurch gekennzeichnet, daß** die vordefinierte Position der Klappe eine Belüftungsposition ist, in der der Enteisungsauslaß durch einen ersten Flügel (48) der Klappe (46) verschlossen ist und der Belüftungsauslaß (42) durch einen zweiten Flügel (50) der Klappe geöffnet ist, wobei der Belüftungsauslaß (42) mit einem Luftstrom versorgt wird, der den Durchgang (64) durchquert, welcher durch den bogenförmigen Teil (58) begrenzt ist.

9. Vorrichtung nach Anspruch 8, **dadurch gekennzeichnet, daß** die vordefinierte Position oder die Belüftungsposition eine erste Endstellung der Klappe darstellt.

10. Vorrichtung nach Anspruch 9, **dadurch gekennzeichnet, daß** die Klappe eine zweite Endstellung einnehmen kann, in der der erste Flügel (48) der Klappe den Enteisungsauslaß (40) öffnet, während der zweite Flügel (50) der Klappe den Belüftungsauslaß (42) und den Fußauslaß (44), die benachbart sind, verschließt.

11. Vorrichtung nach einem der Ansprüche 8 bis 10, **dadurch gekennzeichnet, daß** der zweite Flügel (50) der Klappe (46) an seinem Ende mit einem zylindrischen, kreisförmigen Wandabschnitt (72) versehen ist, der auf der Drehachse (X-X) der Klappe zentriert ist und sich auf der Seite erstreckt, die zum bogenförmigen Teil (58) entgegengesetzt liegt, wobei der Wandabschnitt (72) in einer Zwischenposition der Klappe mit einer Innenwand (80) des Gehäuses, die sich zwischen dem Belüftungsauslaß (42) und dem Fußauslaß (44) erstreckt, zusammenwirken kann.

12. Vorrichtung nach Anspruch 11, **dadurch gekennzeichnet, daß** der zylindrische, kreisförmige Wandabschnitt (72) in der Belüftungsposition mit einer Aufnahme (74) in Form einer Nut, die in einer Wand (70) des Gehäuses ausgebildet ist, die den Belüftungsauslaß (42) begrenzt, in Eingriff stehen kann.

13. Vorrichtung nach den Ansprüchen 9 und 10 in Kombination, **dadurch gekennzeichnet, daß** die Klappe (46) einen Winkelbewegungsweg zwischen der ersten und der zweiten äußersten Position besitzt, der ungefähr eine Vierteldrehung ist.

14. Vorrichtung nach einem der Ansprüche 9 bis 13, **dadurch gekennzeichnet, daß** die Klappe (46) mindestens drei Zwischenpositionen einnehmen kann:
- eine Enteisungs-Fuß-Position, in der der Enteisungsauslaß (40) und der Fußauslaß (44) teilweise geöffnet sind, während der Belüftungsauslaß (42) verschlossen ist;
- eine Fußposition, in der der Fußauslaß (44) offen ist, während der Enteisungsauslaß (40) und der Belüftungsauslaß (42) verschlossen sind; und
- eine Belüftungs-Fuß-Position, in der der Belüftungsauslaß (42) und der Fußauslaß (44) offen sind, während der Enteisungsauslaß (40) verschlossen ist.

## Claims

1. Air distribution device for the heating and/or air conditioning of the passenger compartment of a vehicle, comprising a distribution chamber (34) with a cylindrical shape overall, provided with an air inlet (38) and at least three air outlets (40, 42, 44) situated at the periphery of the distribution chamber, as well as a butterfly flap (46) mounted so as to pivot about an axis (X-X) inside the distribution chamber (34) in order to control the distribution of the air through the air outlets, in which the flap (46) is provided with at least one part (58) in the form of an arch comprising a closure wall (60) defined by generator lines parallel to the pivot axis (X-X) of the flap, the said closure wall (60) being connected to the flap by two spaced-apart plates (62), so that the closure wall (60) and the two plates (62) conjointly delimit an air passage (64) and so that the closure wall (60) is able to close off, at least partly, one (44) of the three air outlets when the flap (46) is in a defined position,
**characterised in that** the butterfly flap (46) comprises a first wing (48) and a second wing (50) with rectangular shapes overall situated in the same plane, on each side of a shaft (52) extending in the direction of the axis (X-X), the first wing (48) being able to control one of the three outlets, whilst the second wing (50) is able to control the other two outlets.

2. Device according to Claim 1, **characterised in that** the closure wall (60) is a partially circular cylindrical wall, centred on the pivot axis (X-X) of the flap (46).

3. Device according to Claim 2, **characterised in that** the cylindrical wall (60) extends over an angular range of less than 45°.

4. Device according to one of Claims 1 to 3, **characterised in that** the plates (62) are attached perpendicularly to the flap (46).

5. Device according to one of Claims 1 to 4, **characterised in that** the plates (62) are attached to the two wings (48, 50) on the flap.

6. Device according to one of Claims 1 to 5, **characterised in that** the flap (46) is provided with a peripheral sealing joint (56).

7. Device according to one of Claims 1 to 6, in which the three air outlets comprise a de-icing outlet (40), a ventilation outlet (42) and a foot outlet (44), **characterised in that** the closure wall (60) is able to close off the foot outlet (44) in the said predefined position of the flap.

8. Device according to Claim 7, **characterised in that** the said predefined position of the flap is a ventilation position in which the de-icing outlet is closed by a first wing (48) of the flap (46) and the ventilation outlet (42) is opened by a second wing (40) of the flap, the ventilation outlet (42) being supplied by an air flow passing through the passage (64) delimited by the arch-shaped part (58).

9. Device according to Claim 8, **characterised in that** the predefined position, or ventilation position, constitutes a first extreme position of the flap.

10. Device according to Claim 9, **characterised in that** the flap is able to adopt a second extreme position in which the first wing (48) of the flap opens the de-icing outlet (40), whilst the second wing (50) of the flap closes off the ventilation outlet (42) and the foot outlet (44), which are adjacent.

11. Device according to one of Claims 8 to 10, **characterised in that** the second wing (50) of the flap (46) is provided at its end with a circular cylindrical wall section (72), centred on the axis of rotation (X-X) of the flap and extending on the opposite side to the arch-shaped part (58), the said wall section (72) being able to cooperate, in an intermediate position of the flap, with an internal wall (80) of the casing which extends between the ventilation outlet (42) and the foot outlet (44).

12. Device according to Claim 11, **characterised in that** the circular cylindrical wall section (32) is able to engage, in the ventilation position, in a groove-shaped housing (74) formed in a wall (70) of the casing which delimits the ventilation outlet (42).

13. Device according to Claims 9 and 10 taken in combination, **characterised in that** the flap (46) has an angular movement between the first and second extreme positions which is approximately a quarter of a turn.

14. Device according to one of Claims 9 to 13, **characterised in that** the flap (46) is able to adopt at least three intermediate positions:
- a de-icing/foot position in which the de-icing outlet (40) and the foot outlet (44) are partially open, whilst the ventilation outlet (42) is closed;
- a foot position in which the foot outlet (44) is open whilst the de-icing outlet (40) and the ventilation outlet (42) are closed; and
- a ventilation/foot position in which the ventilation outlet (42) and the foot outlet (44) are open, whilst the de-icing outlet (40) is closed.
